# FASCICULE DE BREVET EUROPEEN

(11) **EP 0 706 502 B1**
(45) Date de publication et mention de la délivrance du brevet: **05.01.2000**
(21) Numéro de dépôt: 94921002.5
(22) Date de dépôt: 30.06.1994
(51) Int. Cl.: C04B 28/02, C04B 20/00, C04B 41/60, C04B 14/48

(54) **COMPOSITION DE BETON DE FIBRES METALLIQUES POUR MOULER UN ELEMENT EN BETON, ELEMENTS OBTENUS ET PROCEDE DE CURE THERMIQUE**
ZUSAMMENSETZUNG FÜR MIT METALLISCHEN FASERN VERSTÄRKTES BETONELEMENT, SO ERHALTENES ELEMENT UND VERFAHREN ZUR WÄRMEHÄRTUNG DAVON
METAL FIBER CONCRETE COMPOSITION FOR CASTING A CONCRETE ELEMENT, ELEMENTS OBTAINED AND METHOD OF THERMAL CURING

(30) Priorité: 01.07.1993 FR 9308063; 10.03.1994 FR 9402801
(43) Date de publication de la demande: 17.04.1996
(73) Titulaire: BOUYGUES, 78190 Saint-Quentin en Yvelines (FR)
(72) Inventeur: RICHARD, Pierre, Emile, Félix, F-92200 Neuilly-sur-Seine (FR); CHEYREZY, Marcel, Hubert, F-92310 Sèvres (FR); ROUX, Nicolas, Pierre, Jean, F-78180 Montigny-le-Bretonneux (FR)
(74) Mandataire: Schrimpf, Robert
(86) Numéro de dépôt international: FR9400800
(87) Numéro de publication internationale: WO9501316

(56) Documents cités:
- EP-A- 0 273 181
- WO-A-87/07597
- DE-A- 2 952 783
- DE-A- 3 739 997
- FR-A- 2 640 962
- US-A- 3 646 748
- CHEMICAL ABSTRACTS, vol. 101, no. 20, 12 Novembre 1984, Columbus, Ohio, US; abstract no. 176453t, 'Cement articles having ultra-high strenght' & JP,A,59 102 849 (DENKI KAGAKU KOGYO K.K.) 1 Décembre 1982
- CHEMICAL ABSTRACTS, vol. 100, no. 18, 30 Avril 1984, Columbus, Ohio, US; abstract no. 144069k, 'Roofing' & JP,A,5 851 904 (TOYOBO CO., LTD.) 18 Novembre 1983

## Description

L'invention concerne un béton de fibres métalliques pour mouler des éléments en béton.

"Béton de fibres métalliques" signifie ici un corps de matrice cimentaire incluant des fibres métalliques et obtenu par durcissement d'une composition cimentaire mélangée avec de l'eau.

"Elément de béton" signifie ici des poteaux, des poutres, des dalles, des murs, des panneaux, des blindages, des panneaux de plaquage, et tout élément décoratif ou structurel utilisé dans une construction.

Les bétons traditionnels ont un squelette granulaire formé des trois phases suivantes :
- le ciment qui constitue la phase liante avec une taille de grains comprise entre 1 micromètre et 100 micromètres ;
- le sable avec une taille de grains comprise entre 1 et 4 mm :
- les granulats ou graviers de grosseur comprise entre 5 et 20 mm ou entre 5 et 25 mm.

Les bétons de fibres métalliques traditionnels comportent des fibres en acier dont la longueur est comprise entre 30 et 60 mm. La longueur maximale des fibres pouvant être utilisées est limitée d'une part par les possibilités de malaxage sans dégradation excessive et d'autre part par les nécessités du coulage du béton (mise en place et vibration).

Les fibres métalliques lisses sont ancrées dans le béton par adhérence. Pour assurer un bon comportement de la fibre lisse, il importe que le coefficient de forme égal au quotient de la longueur par le diamètre de la fibre soit compris entre 50 et 100. Ce coefficient de forme optimal peut être réduit lorsque l'ancrage de la fibre est amélioré par une modification de sa géométrie : ondulations, crochets aux extrémités, crénelages, etc...

Les dosages de fibres utilisés dans les bétons de fibres traditionnels varient de 30 kg/m³ à 150 kg /m³ ; ils sont généralement compris entre 40 kg/m³ et 80 kg /m³, ce qui correspond à un pourcentage en volume compris entre 0.5 % et 1 %.

La longueur L des fibres est généralement comprise entre 30 mm et 60 mm, tandis que le diamètre D des plus gros granulats est généralement compris entre 20 et 25 mm, en sorte que le rapport R = L/D est compris entre 1,2 et 3,0.

Dans le béton traditionnel l'interface entre les granulats et la pâte de ciment durci constitue une zone de faible résistance du fait de sa plus grande porosité (auréole de transition). Cet interface est également le siège de contraintes locales dues à l'anisotropie de comportement entre le granulat et la pâte. Dans le cas d'une traction d'ensemble exercée sur le béton les granulats ne peuvent rester liés les uns aux autres que s'il existe des attaches résistant à la traction et ayant une longueur de développement au moins égale à environ dix fois la taille du plus gros granulat.

Le rapport R étant au maximum de 3.0, les fibres ne peuvent lier efficacement les granulats les uns aux autres.

Cela est confirmé par le fait que l'ajout de fibres métalliques dans le béton traditionnel n'améliore que faiblement la résistance à la traction du béton. Cette amélioration est de quelques pour cent pour les dosages en fibres usuels de 0,5 à 1 % en volume.

Les fibres métalliques utilisées dans les bétons qui ne comportent pas d'armatures traditionnelles ne permettent pas d'éviter la fissuration du béton, elles permettent seulement de la répartir, c'est-à-dire que l'on a un grand nombre de micro-fissures cousues par les fibres au lieu de fissures moins nombreuses mais plus larges.

En conséquence, l'utilisation des bétons de fibres métalliques sans armature passive traditionnelle est limitée.

Des compositions particulières de bétons de fibres métalliques et des procédés particuliers pour réaliser des matrices cimentaires contenant des fibres métalliques sont connus (COMPRESIT, SIFCON et autres) et sont décrits par exemple dans les brevets US 4 979 992 (H.H.BACHE), 4 513 040, 4 559 881, 4 593 627 et 4 668 548 (D.R.LANKARD).

La publication WO-A-87/07597 décrit des matrices cimentaires comprenant des composants tels que définis dans le préambule de la revendication 1 qui sont choisis et proportionnés pour coopérer avec une quantité importante d'armatures passives en vue d'obtenir des structures compacts ayant des propriétés mécaniques avantageuses.

La présente invention concerne de nouvelles compositions spécifiques pour fabriquer un béton ductile à ultra-haute résistance permettant la construction d'éléments en béton précontraints ou non, ne comportant aucune armature passive.

Un but de l'invention est d'obtenir des éléments en béton de fibres métalliques sans armature passive traditionnelle ayant une résistance à la traction au moins comprise dans la gamme environ 30 MPa à environ 60 MPa.

Un autre but de l'invention est d'obtenir des éléments en béton de fibres métalliques ayant une énergie de fracturation au moins comprise dans la gamme environ 10 000 à environ 40 000 J/m².

Un autre but de l'invention est d'obtenir des éléments de structure ayant un allongement à la rupture qui soit au moins dans la gamme 4000.10⁻⁶ m/m à 9000.10⁻⁶ m/m.

Un but de l'invention est également d'obtenir un béton de fibres métalliques ayant une résistance à la compression au moins comprise dans la gamme environ 150 à environ 250 MPa.

Un but de l'invention est aussi d'obtenir des éléments en béton ayant un facteur d'intensité de contrainte qui soit au moins dans la gamme 6 MPa m^{0,5} à 13 MPa m^{0,5}.

L'invention vise aussi à fournir des éléments en béton présentant des performances comparables à celles de l'élément correspondant en béton traditionnel mais avec une économie de poids de 1 (béton de l'invention) pour au moins 2,5 (béton classique).

L'invention vise aussi à fournir un béton permettant de mouler des formes qui ne pourraient l'être avec un béton classique.

Une composition de béton de fibres métalliques conforme à l'invention est constituée pour l'essentiel de ciment Portland, de grains de sable, de composants ayant une réaction pouzzolanique avec le ciment, de fibres métalliques, d'un agent dispersant, éventuellement d'autres adjuvants, et d'eau et elle est caractérisée en ce que 90% au moins (en poids) des grains de sable ont une grosseur de grain maximale D au plus égale à 800 micromètres, en ce qu'au moins 90% (en poids) des fibres métalliques ont une longueur individuelle 1 comprise dans la gamme 4 mm - 20 mm, en ce que le rapport R entre la longueur moyenne L des fibres et ladite grosseur maximale D est au moins égal à 10, et en ce que la quantité des fibres métalliques ayant une longueur individuelle comprise dans la gamme 4 mm - 20 mm est telle que le volume des fibres ayant une longueur individuelle comprise dans la gamme 4 mm - 20 mm est dans la gamme 1.0 % à 4 % du volume du béton après la prise, et en ce que la composition contient pour 100 parties (en poids) de ciment, au moins 60 parties (en poids) de grains de sable ayant une grosseur de grain maximale au plus égale à 800 micromètres et au moins 10 parties (en poids) de fibres métalliques ayant une longueur individuelle comprise dans la gamme 4 mm - 20 mm.

Une telle composition après gâchage et durcissement dans un moule produit un corps solide en béton de fibres métalliques.

Les grains de sable ayant une grosseur de grain maximale au plus égale à 800 micromètres représentent de préférence au moins 95 %, ou encore mieux au moins 98 %, de la masse totale des grains de sable.

Les fibres métalliques représentent de préférence au moins 95 %, ou encore mieux au moins 98 %, de la masse totale des fibres métalliques.

Idéalement, les grains de sables ayant une grosseur de grain maximale au plus égale à 800 micromètres constituent la totalité des grains de sable et les fibres métalliques ayant une longueur individuelle comprise dans la gamme 4 mm - 20 mm constituent la totalité des fibres métalliques.

Dans des modes de réalisation particulièrement avantageux :
- D est au plus égal à 600 micromètres, ou mieux à 400 micromètres, (des grosseurs de 800, 600 et 400 micromètres correspondant sensiblement à des équivalents tamis respectifs de 30, 29 et 27 de la série AFNOR NF X 11-501
- 1 est compris dans la gamme 8 - 16 mm, ou mieux dans la gamme 10 - 14 mm ;
- les fibres métalliques ayant une longueur individuelle comprise dans la gamme 4 mm - 20 mm ont un diamètre compris dans la gamme 80 - 500 micromètres, ou mieux 100 - 200 micromètres
- le pourcentage en volume des fibres métalliques ayant une longueur individuelle comprise dans la gamme 4 mm - 20 mm est situé dans la gamme 2,0 % - 3 %, de préférence environ 2,5 %, du volume du béton après la prise ;
- les grains de sable sont essentiellement des sables fins, de préférence du groupe constitué par le sable naturel tamisé, le sable broyé et les autres sables fins.
- le ciment Portland est un ciment du groupe constitué par le CPA PMES, HP, HPR et mieux HTS (haute teneur en silice) :
- les fibres métalliques sont des fibres du groupe constitué par les fibres d'acier, les fibres d'acier inoxydable, et les fibres d'acier ou d'acier inoxydable revêtues d'un métal non ferreux tel que le cuivre, le zinc et autres métaux ou alliages de métaux non ferreux ;
- les éléments fins à réaction pouzzolanique sont des éléments du groupe constitué par les silices, les cendres volantes et les laitiers de haut-fournaux ayant une grosseur moyenne inférieure à 0,5 micromètre ;
- l'agent dispersant est un superplastifiant du groupe constitué par la naphtalène, la mélamine, le polyacrylate et autres superplastifiants.

Dans un exemple typique, les granulats du mélange pour béton ont un diamètre au plus égal à 400 micromètres et les fibres métalliques ont une longueur, supérieure à12 mm, ce qui donne un rapport R = 30.

Le comportement de la fibre de longueur 12 mm dans la matrice en béton de poudre réactive est analogue au comportement d'une armature lisse traditionnelle d'une longueur de L = R x D, c'est-à-dire 30 x 20 = 600 mm.

Le fonctionnement mécanique du béton de l'invention est donc identique, à un effet d'échelle près, au fonctionnement mécanique du béton armé traditionnel comportant des armatures traditionnelles de longueur 600 mm.

Alors que les bétons de fibres traditionnels sans armatures ne peuvent pas être utilisés comme bétons de structure, c'est-à-dire pour la fabrication de poutres, de poteaux et de dalles, le béton de l'invention "micro-armé" constitue au contraire un nouveau matériau utilisable pour de telles applications.

Dans une réalisation préférée, le mélange pour béton comprend pour 100 parties en poids de ciment, 60 à 150 (ou mieux 80 à 130) parties en poids de sable fin ayant une grosseur de grains moyenne de 150 à 400 micromètres, 10 à 40 (ou mieux 20 à 30) parties en poids de silice amorphe ayant une grosseur de grains inférieure à 0,5 micromètres, 10 à 80 (ou mieux 15 à 40) parties en poids de fibres métalliques ayant une longueur moyenne comprise entre 10 et 14 mm, au moins 0,5 partie en poids (extrait sec) d'un agent dispersant, des adjuvants éventuels, et 10 à 30, de préférence 10 à 24, et encore mieux 12 à 20, parties en poids d'eau.

L'invention n'est pas limitée à l'utilisation d'un super plastifiant particulier mais on donne la préférence au super plastifiant de type polyacrylate sur les superplastifiants de types mélamine et naphtalène. On utilise de préférence au moins 0,5, ou mieux au moins 1,2, encore mieux environ 1,8 parties en poids de superplastifiant (extrait sec).

La silice utilisée est de préférence une fumée de silice, notamment une fumée de silice provenant de l'industrie du zirconium plutôt qu'une fumée de silice provenant de l'industrie du silicium.

Dans des réalisations, la silice peut être totalement ou partiellement remplacée par d'autres matières à réaction pouzzolaniques comme les cendres volantes et les laitiers de haut-fourneaux, par exemple.

On prépare le béton de l'invention en mélangeant les constituants solides et de l'eau, de façon en soi connue.

De préférence, le béton obtenu est soumis à une cure à une température comprise entre l'ambiante et 100° C, notamment une cure entre 60 et 100° C, de préférence à une température de l'ordre de 90° C.

La durée de la cure est de préférence comprise entre six heures et quatre jours avec une durée optimale de l'ordre de deux jours, la cure commençant après la fin de la prise du mélange.

La cure est réalisée en ambiance sèche ou humide ou suivant des cycles faisant alterner les deux ambiances, par exemple vingt quatre heures de cure en ambiance humide, suivi de vingt quatre heures de cure en ambiance sèche.

On met en oeuvre cette cure sur des bétons ayant terminé leur prise, de préférence âgés d'au moins un jour, et encore mieux âgés d'au moins sept jours environ.

Dans des réalisations particulières :
- le béton est étuvé à 60°C - 100°C pendant six heures à quatre jours à compter de la fin de la prise,
- le béton est étuvé à 60 - 100°C pendant douze heures à vingt quatre heures à compter de la fin de la prise ;
- le béton est étuvé à 60 - 100° C pendant six heures à quatre jours. au moins un jour après le début de la prise ;
- le béton est étuvé à 70° - 90° C pendant six heures à quatre jours après la fin de la prise.

L'addition de poudre de quartz broyé est particulièrement utile lorsque le béton est curé à haute température, comme le montre le tableau ci-après :

**TABLEAU I**

| | RESISTANCE EN COMPRESSION | RESISTANCE EN TRACTION PAR FLEXION |
|---|---|---|
| Sans addition | 230 MPa | 52 MPa |
| Avc addition | 250 MPa | 60 MPa |

Le tableau ci-après donne des exemples comparatifs des caractéristiques du béton de l'invention et d'autres bétons.

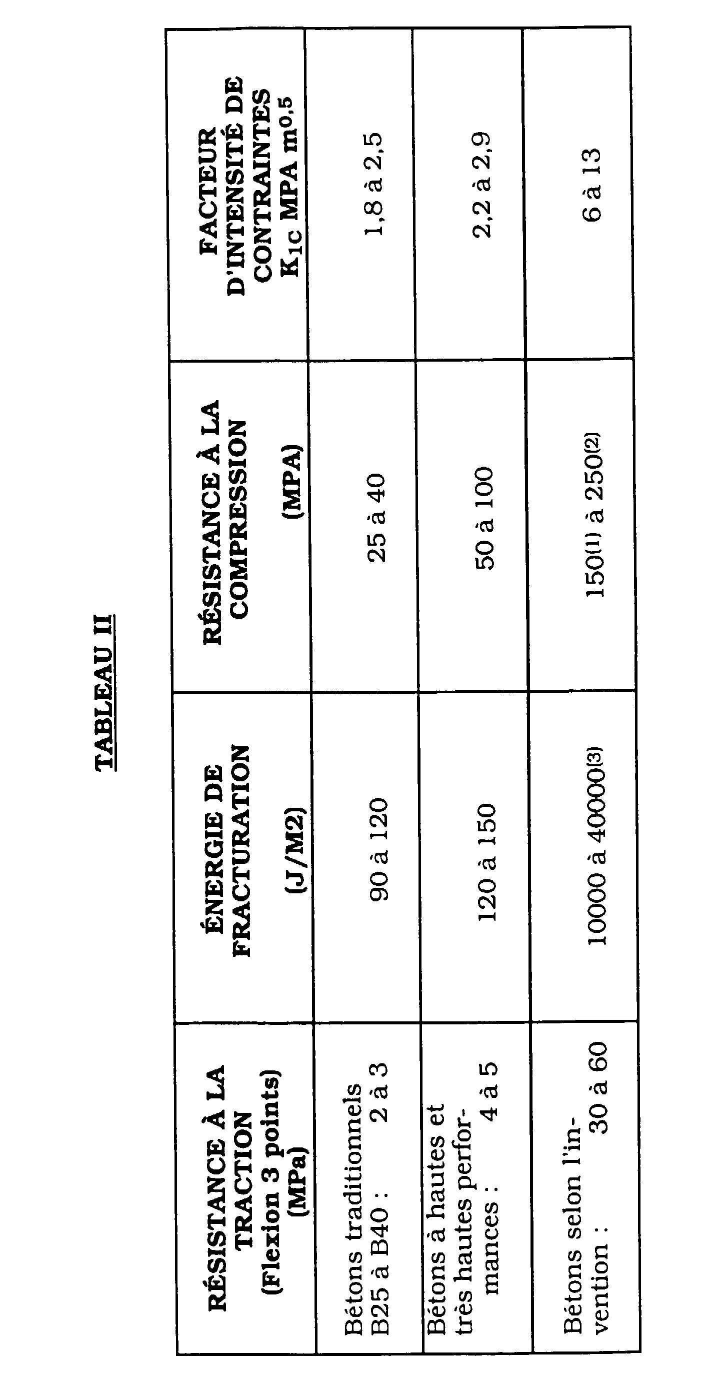

(1) Après 28 jours de cure à température ambiante ;
(2) Après 2 jours de précure à température ambiante puis cure à 80-90°C ;
(3) Selon le type de cure thermique appliquée et la quantité de fibres métalliques (de 1 % à 4 % en volume).

L'invention sera encore expliquée en détails ci-après en référence aux figures du dessin joint sur lequel :
- la fig. 1 est un schéma de la microstructure d'un béton selon l'invention ;
- la fig. 2 est une courbe de la résistance à la traction du béton en fonction du taux en volume des fibres métalliques ;
- la fig. 3 est une courbe de l'énergie de fracturation du béton en fonction du taux en volume des fibres métalliques ;
- la fig. 4 est une courbe de l'énergie de fracturation du béton en fonction de la longueur des fibres ;
- la fig. 5 est une courbe de la résistance à la compression du béton en fonctiondu rapport eau / ciment ;
- la fig. 6 est une courbe de l'ouvrabilité et de la résistance à la compression du béton en fonction du rapport superplastifiant / ciment ;
- la fig. 7 est une courbe de la résistance à la compression du béton en fonction de la température de post-cure ;
- la fig. 8 est une courbe de la résistance à la traction du béton comparée à celle d'un mortier classique ;
- la fig. 9 est une courbe de l'énergie de fracturation du béton comparées à celles d'un mortier classique ;
- la fig. 10 est une demi-élévation d'une poutre en béton selon l'invention ;
- la fig. 11 est une section droite de la poutre en travée (fig. 11A) et sur appuis (fig. 11B) ;
- la fig. 12 est un schéma de la répartition des vérins hydrauliques utilisés pour charger la poutre ;
- la fig. 13 est une courbe de la flèche en travée en fonction du moment de flexion ;
- la fig. 14 est un diagramme des contraintes à l'apparition des fissurations de la poutre ;
- la fig. 15 est la section droite du tablier d'un pont en béton selon l'invention ;
- la fig. 16 est la section droite du tablier correspondant d'un pont en béton classique, et
- la fig. 17 est une courbe de l'allongement ultime en traction d'un béton selon l'invention.

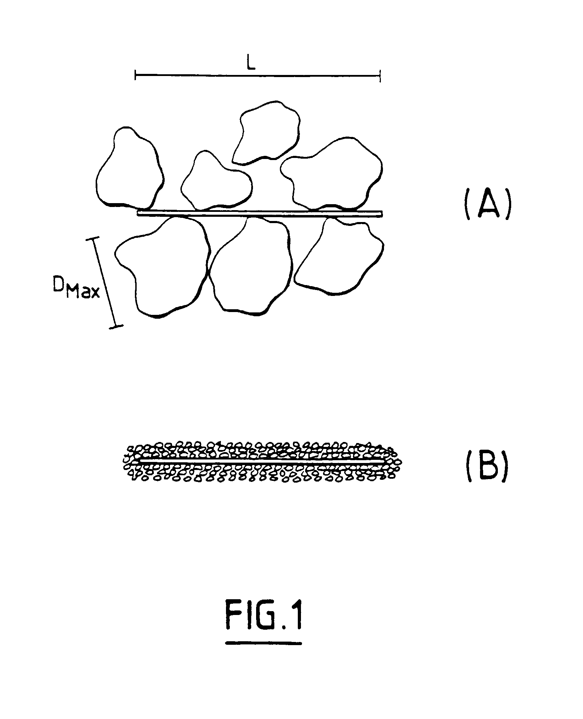

La figure 1 schématise le mode de fonctionnement des fibres métalliques dans le béton de l'invention, comparé à celui des armatures passives traditionnelles : - la fig. 1A est un schéma d'une fibre de longueur L = 60 mm entourée de granulats de diamètre maximal D = 25 mm, le rapport R = L/Dₘₐₓ = 2,4 et la fig. 1 B est un schéma (à échelle différente) d'une fibre métallique entourée de granulats dans un béton selon l'invention avec L = 12 mm et Dₘₐₓ = 0,4 mm.

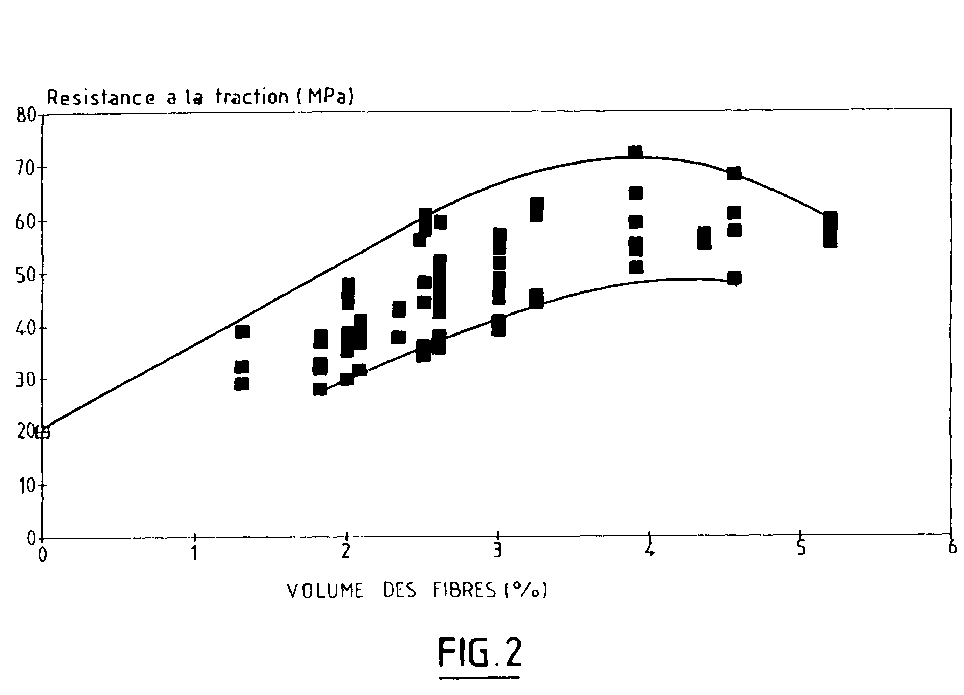

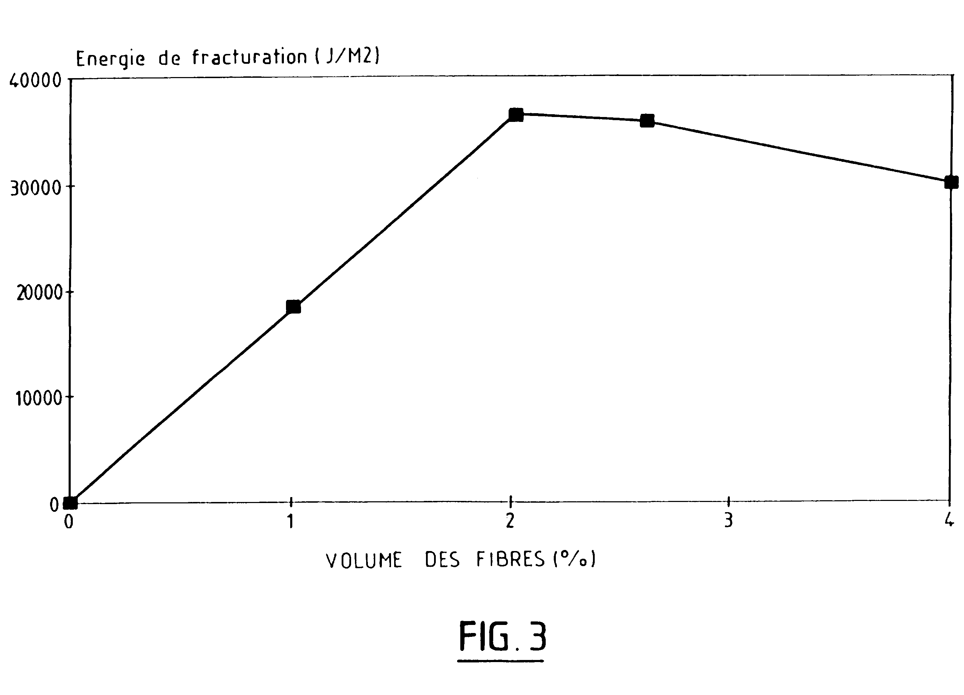

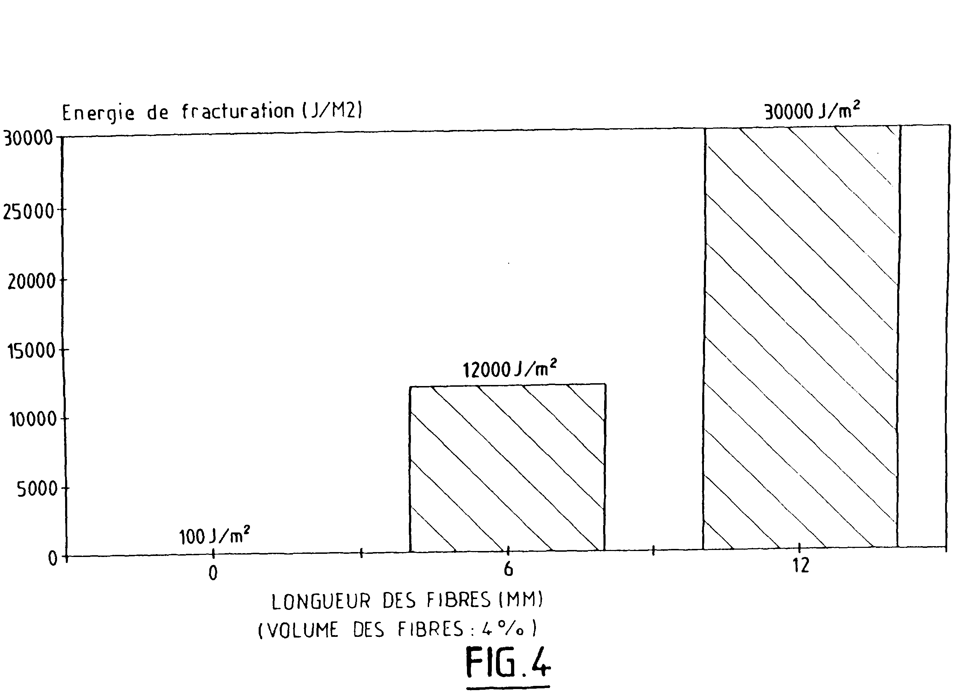

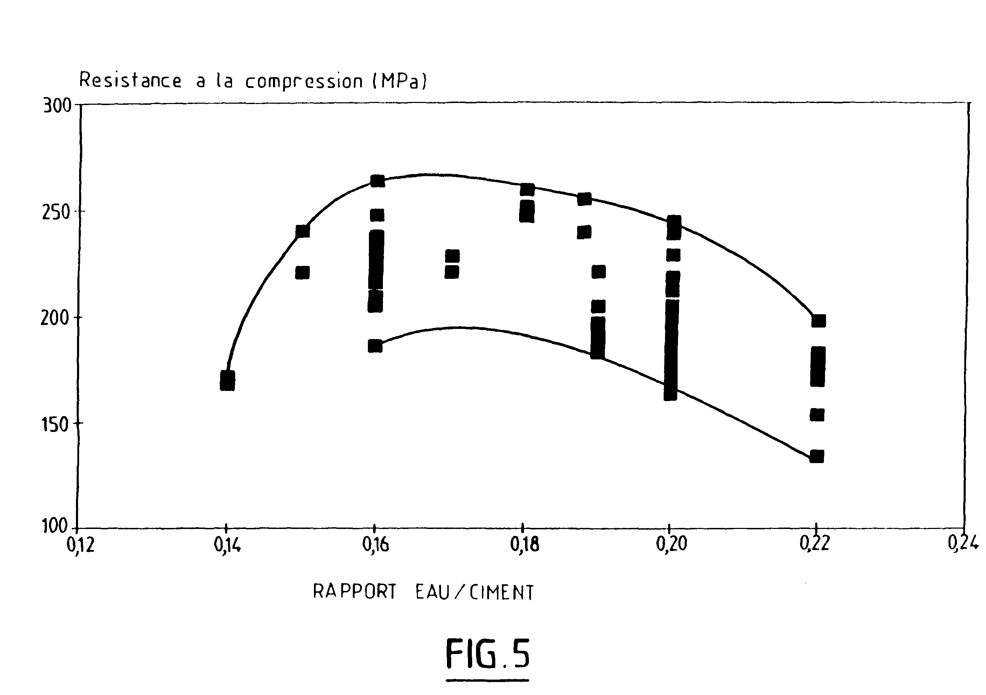

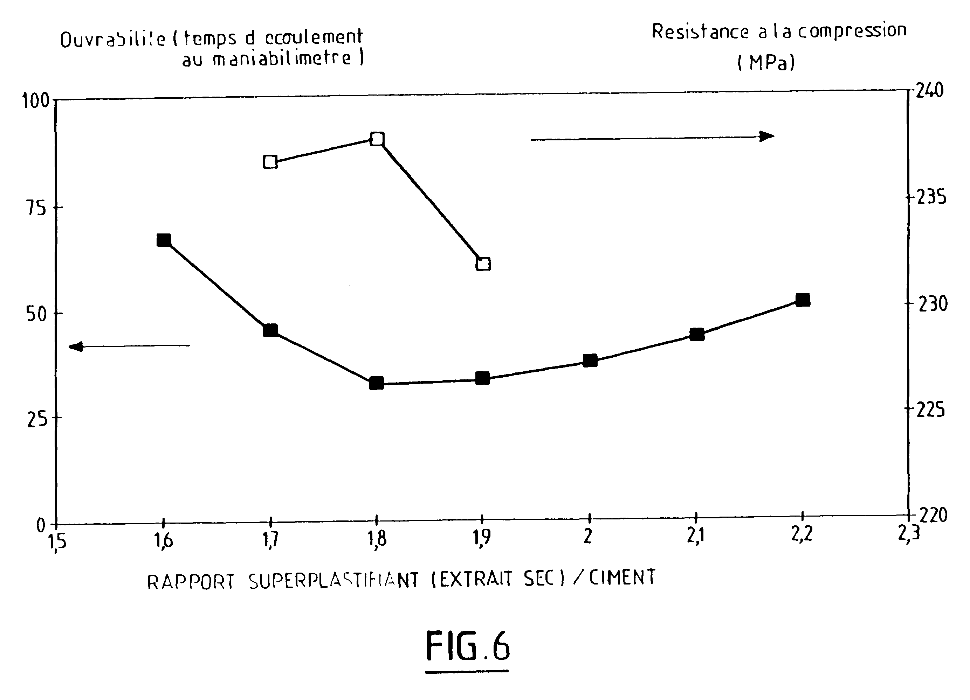

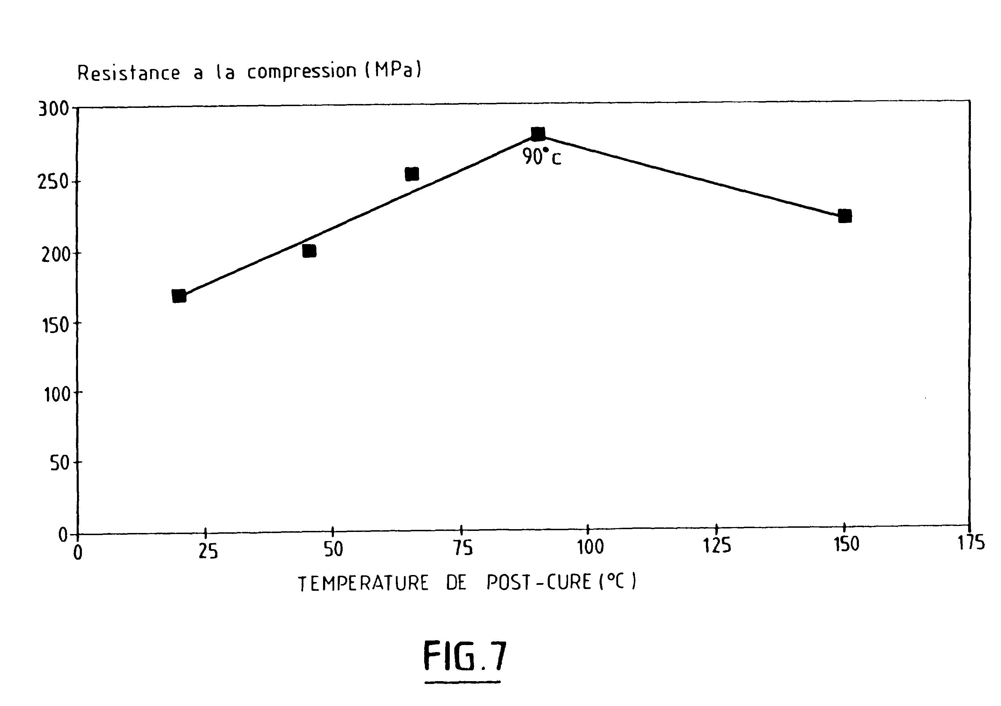

Les figs. 2 à 7 sont des courbes montrant la variation de certaines propriétés d'un béton selon l'invention, en fonction de différents paramètres (taux des fibres, longueur des fibres, rapport eau/ciment, rapport superplastifiant/ciment, température de postcure).

Il est clair que :
- le meilleur pourcentage de fibres pour ce qui concerne la résistance à la flexion est environ 3,5 (en volume),
- le meilleur pourcentage de fibres pour ce qui concerne l'énergie de fracturation est environ 2,0 environ 2,5,
- le meilleur rapport eau/ciment est environ 0,16 à environ 0,18.
- le meilleur rapport plastifiant (extrait sec)/ciment est environ 1,8% dans le cas d'un polyacrylate,
- le mailleure température de cure est environ 80°C à environ 90°C.

L'invention sera encore illustrée ci-après par quelques exemples :

### EXEMPLE I

Une composition typique pour préparer un béton selon l'invention est donnée dans le Tableau III ci-après :

**TABLEAU III**

| | |
|---|---|
| Ciment CPA.PMES | 955 kg / m3 |
| | |
| Sable fin de quartz (150-300 micromètres) | 1 051 kg/ m³ |
| | |
| Silice | 239 kg/ m³ |
| | |
| Superplastifiant (polyacrylate) | 13 kg/m³ |
| | |
| Fibres d'acier calibrées (L=12.5 mm, ⌀ = 0,18mm) | 191 kg/m³ |
| | |
| Eau totale | 153 l/m³ |

La silice est principalement de la fumée de silice (18 m²/g).

Les fibres d'acier sont droites et lisses.

Les composants peuvent être mélangés, coulés et vibrés comme ceux des bétons classiques, en débit du faible pourcentage d'eau par rapport au ciment.

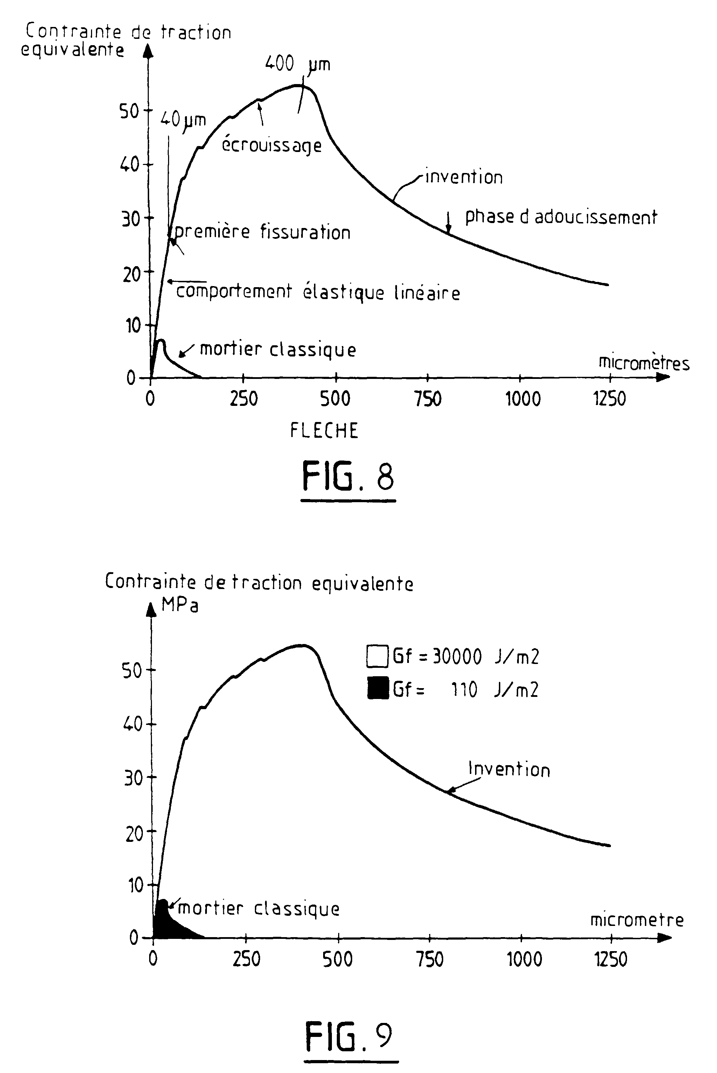

Le pourcentage de fibres conditionne la résistance à la flexion et l'énergie de fracturation. La fig. 8 montre le comportement d'un tel béton comparé à celui d'un mortier classique, dans un essai de flexion 3-points sur éprouvettes entaillées. Le béton de l'invention manifeste une large phase d'écrouissage suivi d'un l'adoucissement graduel. La contrainte de traction maximale est deux fois la contrainte de traction à la première fissuration (respectivement 50MPa et 25 MPa). La flèche la contrainte maximale est environ 10 fois plus grande que la flèche à l'ouverture de la première micro-fissuration.

La fig. 9 montre les résultats obtenus durant des essais de flexion points sur des éprouvettes de 4 cm x 4 cm x 16 cm entaillées. L'énergie de fracturation, proportionnelle à la surface située sous la courbe est typiquement de 30.000 j/m² pour un béton selon l'invention alors qu'elle est inférieure à 100 J/m² pour un mortier classique.

Le béton de l'invention peut être utilisé dans des éléments de structure sans armatures passives.

Dans le béton traditionnel il est nécessaire de disposer des armatures traditionnelles au voisinage de toutes les surfaces latérales à une distance -appelée enrobage- généralement comprise entre 1 et 5 cm et jamais supérieure à 10 cm. Cette nécessité conduit à ce que les surfaces latérales des pièces en béton sont généralement planes et régulières ou plus rarement à simple courbure, et presque jamais à double courbure.

Le béton selon l'invention pouvant être utilisé sans armatures traditionnelles. il est possible de réaliser des pièces plus minces avec une grande liberté de forme. En effet la nécessité de prévoir des armatures dans les bétons traditionnels, dans chaque direction, ainsi que leur enrobage minimum sur les deux faces, conduit à une épaisseur minimale de 7 cm pour les pièces coulées horizontalement, et de 12 cm pour les pièces coulées verticalement comme le sont les murs et les voiles. Avec le béton de l'invention l'épaisseur minimale des pièces coulées horizontalement est de 8 mm, et l'épaisseur minimale des pièces coulées verticalement est de 20 mm. Cet avantage permet de réaliser d'importantes économies de matière.

La liberté de forme obtenue avec le béton de l'invention permet de réaliser des pièces de forme complexe ayant un meilleur aspect architectural. Cette liberté de forme permet également de mieux répartir la matière là où elle est strictement nécessaire pour la résistance. Cela représente une économie de matière très importante.

Les économies de matière permises par l'invention sont encore accrues pour les pièces dans lesquelles le poids propre représente une part importante des charges totales.

Le béton de l'invention peut également être utilisé dans des éléments précontraints sans armature passive.

Pour une poutre précontrainte l'utilisation du béton suivant l'invention conduit à un gain de matière dans un rapport qui est au minimum de 2,5.

L'utilisation du béton précontraint conventionnel nécessite l'emploi d'armatures traditionnelles le long des parements des pièces. ainsi que des renforts d'armatures dans les zones d'ancrage des éléments - fils, torons ou câbles - de précontrainte. Cela est valable qu'il s'agisse du béton précontraint par post-tension (barres sous gaine monotorons gainés graissés ; câble sous gaine, le câble étant constitué d'un assemblage de fils ou de torons) ou du béton précontraint par prétension (fil adhérent ; toron adhérent).

L'utilisation du béton de l'invention est particulièrement intéressante dans le cas de pièces précontraintes puisqu'il permet l'économie de toutes les armatures traditionnelles y compris celles qui sont rendues nécessaires par la présence des éléments de précontraintes. En effet les efforts dits de diffusion de la précontrainte aux abouts génèrent des contraintes de traction et de cisaillement qui dépassent largement les capacités de résistance du béton traditionnel, et qui doivent donc être repris par des armatures. Par contre la résistance et la ductilité du béton selon l'invention sont suffisantes pour reprendre les efforts sans armatures traditionnelles.

### EXEMPLE II

On coule une poutre en T avec une composition de béton ayant la composition suivante (taux de fibres : 2,6 % en volume).

**TABLEAU IV**

| | |
|---|---|
| Ciment CPA.PMES | 879 kg/m³ |
| Sable fin (150 - 400 micromètres) | 966 kg/m³ |
| Fumée de silice (150 - 400 micromètres) | 219 kg/m³ |
| Fluidifiant (extrait sec) | 13 kg/m³ |
| Eau totale | 193 l/m³ |
| Fibre d'acier calibrées (L = 12 mm, ⌀ = 0, 18 mm) | 198 kg/m³ |

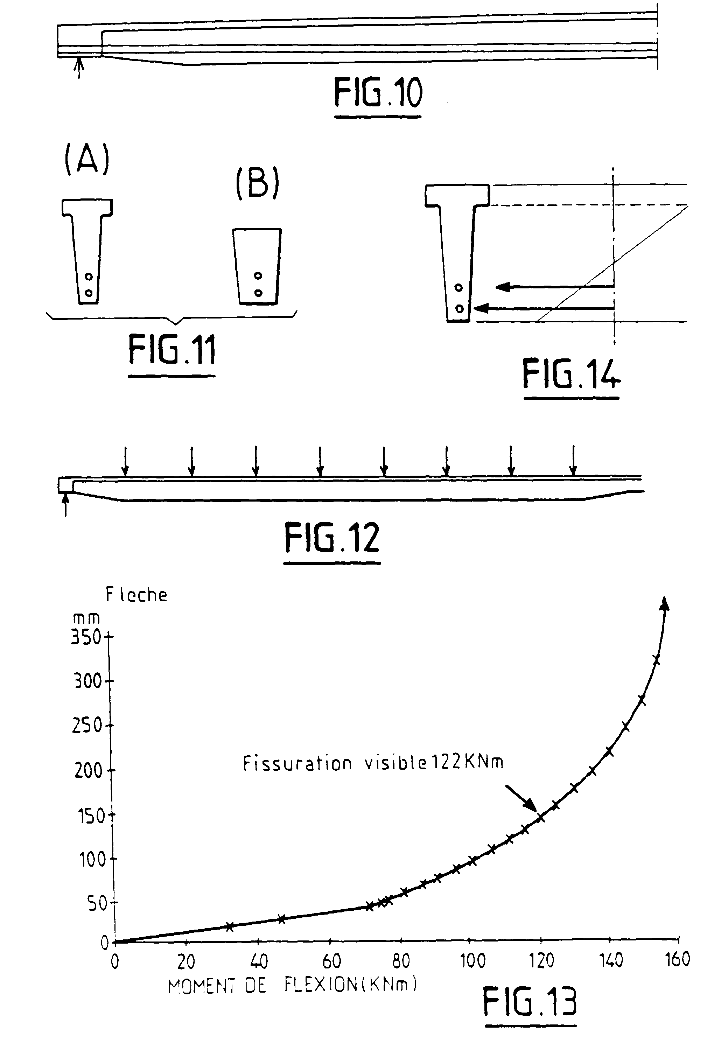

La poutre d'essai a une section transversale en T, une longueur totale de 10 m et une hauteur de 0,34 m (Fig. 10) La membrure supérieure a une largeur de 0.15 et l'âme à une épaisseur de 0,06 m (Fig. 11).

La précontrainte est réalisée par deux torons T15 de 139 mm² de section. La limite élastique de l'acier est de 1 525 MPa et la contrainte de rupture garantie est de 1 730 MPa. La poutre ne comporte aucune armature passive.

Les torons ont été tendus à 90 % de leur limite élastique avant le bétonnage de la poutre. La détention et le recepage ont été effectués 4 jours après le bétonnage. La rentrée des torons a été en moyenne de 1,6 mm, ce qui correspond à une longueur d'ancrage d'environ 0,70 m.

A l'âge de sept jours, une cure à la vapeur d'eau a permis de maintenir une température dans le béton de 80°C pendant cinq jours. Au moment du transfert de précontrainte, la résistance en traction par flexion du béton était de 22 MPa. La poutre a été chargée à 21 jours. Acet âge la résistance en compression mesurée sur cylindre était de 170 MPa, la résistance en traction par flexion était de 42 MPa et le module d'Young était de 50 GPa.

Des charges verticales ont été appliquées par l'intermédiaire de huit vérins répartis uniformémént (Fig. 12). Une face de la poutre a été peinte pour faciliter la détection visuelle de la fissuration. Les charges ont été appliquées par paliers avec relevé des flèches à mi-portée et sur appuis à titre de contrôle.

La poutre a été chargée jusqu'à 82 kNm, puis entièrement déchargée. Aucune flèche résiduelle n'a été observée. Au cours du second chargement, la fissuration est apparue pour un moment fléchissant de 122 kNm (Fig. 13). Les fissures de faible ouverture (0,1 - 0,2 mm) était réparties assez uniformément tous les 0,30 m dans le tiers central de la poutre.

Dans cet état de sollicitation, la contrainte théorique de traction sur la fibre inférieure calculée en section non fissurée est de 39 MPa (Fig. 14) et la contrainte de compression sur la fibre supérieure est de 49 MPa.

Le chargement a été poursuivi jusqu'au voisinage de l'état limite ultime. Lorsque le moment a atteint 147 kNm trois larges fissures se sont développées dans la partie centrale. La rupture de la poutre a été obtenue par rupture des torons sous une sollicitation de 157 kNm.

Aucune fissure d'effort tranchant n'a été observée sous la contrainte maximale de cisaillement de 3,5 MPa. Il en a été de même dans les zones de diffusion d'effort au voisinage des appuis.

Le béton de l'invention a conformé sa capacité à reprendre les efforts de traction secondaires sans fissurer.

La fissuration de flexion principale a été observée à un niveau de contrainte de traction extrêmement élevé. Le comportement de la poutre après fissuration se caractérise par un accroissement de résistance de 32 % et par le développement d'une importante flèche post-élastique.

L'absence d'armatures passives permet en outre, de retenir des formes de coffrage mieux adaptées à la reprise des efforts dans les différente sections. Cela conduit à des améliorations supplémentaires de l'efficacité du matériau de l'invention.

### EXEMPLE III

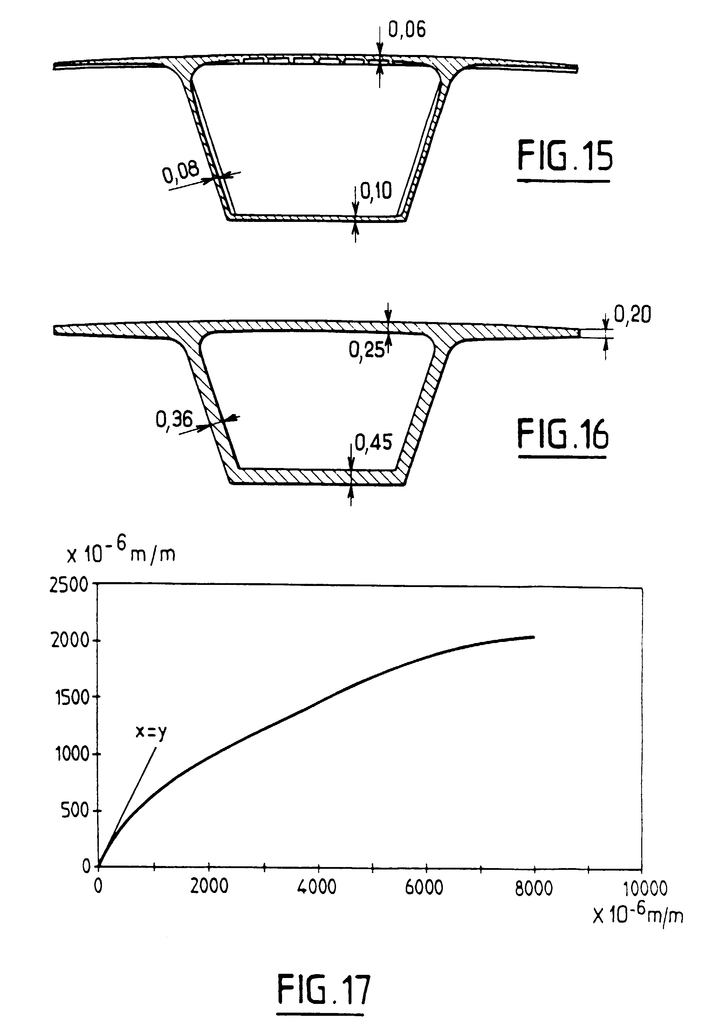

La fig. 15 montre la section droite du tablier d'un pont en béton tel que défini tans le Tableau IV et la fig. 16 montre la section droite du tablier correspondant en béton classique, les deux tabliers ayant les mêmes performances.

La largeur du tablier est 15.50m en haut, 5,24 m à la base et la hauteur est de 5 m.

Le volume de béton en m³ par mètre carré de tablier est 0,23 dans le premier cas et 0,67 dans le deuxième cas.

### EXEMPLE IV

On utilise le procédé défini ci-après pour couler une poutre en treillis constituée de membranes cylindrique longues de cinq mètres et ayant un diamètre de 0,4 mètres. Le volume de l'élément (sans les armatures) est 0,63 m³. La poutre est précontrainte par post-tension après assemblage.

**TABLEAU V**

| | |
|---|---|
| Ciment Portland à haute teneur en silice | 920 kg / m³ |
| Fumée de silice | 212 kg / m³ |
| Poudre de Quartz broyé (grosseur moyenne : 10 micromètres) | 359 kg / m³ |
| Sable (max 0.5 mm) | 662 kg/ m³ |
| Fibres d'acier calibrées (L = 12.5 mm, ⌀ = 0,180 mm) | 184 kg / m³ |
| Superplastifiant Polyacrylate (extrait sec) | 17 kg / m³ |
| Eau | 175 kg/ m³ |

Les propriétés mécaniques du béton otbenu sont les suivantes:

**TABLEAU VI**

| | |
|---|---|
| Résistance à la compression | 190 MPa |
| Résistance à la flexion | 50 MPa |
| Module E | 54 GPa |

Ce béton peut être obtenu avec les malaxeurs habituels suivant une technique qui est de préférence la suivante :
1) Introduction des composants secs (sauf les fibres) dans le malaxeur.
   On introduit d'abord le sable, puis les éléments les plus fins et enfin le ciment. On mélange pendant 30 à 90 secondes.
2) Introduction de l'eau et du superplastifiant dans le malaxeur.
   On mélange le superplastifiant et l'eau et on disperse ce mélange dans le malaxeur. On mélange pendant quatre à sept minutes, suivant l'efficacité du malaxeur.
3) Introduction des fibres dans le malaxeur.
   On introduit les fibres dans le malaxeur en une minute et on vibre le béton pour démêler les fibres.
   L'opération de malaxage est terminée deux à trois minutes après la fin de l'introduction des fibres.
   Le temps total de malaxage varie de sept à douze minutes.
   Ainsi le béton selon l'invention peut être malaxé suivant la même méthode et les mêmes équipements que le béton traditionnel, mais le temps de malaxage est multiplié par cinq environ.
   La poutre est moulée verticalement, avec vibration externe, de façon classique.
   Le démoulage a lieu dix huit heures après la prise et la poutre est conservée dans une chambre climatique à une humidité relative de 90 % à une température de 20° durant sept jours. Une cure thermique à 90°C est appliquée durant vingt quatre heures au moyen de jets de vapeur. La poutre est alors prête pour sa prise en place et les opérations de précontrainte.

### EXEMPLE V - Caractérisation de la déformation ultime en traction du matériau

L'essai est réalisé sur une éprouvette prismatique d'une longueur de 60 cm possédant une section de 4 sur 5 cm qui est soumise à un essai de flexion 4 points.

La formulation utilisée pour la fabrication des éprouvettes est la suivante (en parties en poids) :

**TABLEAU VII**

| | |
|---|---|
| Ciment Portland Type HPR | 1 |
| Microsilice de l'industrie du zirconium (blanche) | 0,25 |
| Sable (diamètre min. 0.15 mm, max 0,5mm) | 1,03 |
| Fibres métalliques (longueur 12,7 mm, diamètre 0.15mm) | 0,2 |
| Superplastifiant mélamine (extrait sec) | 0,014 |
| Eau | 0,19 |

L'éprouvette prismatique est vibrée à la table dans un moule étanche en bois et surfacée à la truelle. Le démoulage à lieu seize heures après le gâchage. Le béton selon l'invention subi alors une cure thermique à 90°C avant d'être exposé à l'ambiante jusqu'au jour de l'essai.

L'essai de flexion quatre points est réalisé sur l'éprouvette mise en appuis sur deux cylindres distants de 50 cm. La charge est appliquée à l'aide de deux cylindres excentrés de 10 cm. L'ensemble est rotulé pour supprimer tout effort parasite. La contrainte de flexion est supposée constante sur 20 cm au centre de l'éprouvette.

La mise en charge est progressive et la déformation est mesurée sur la fibre supérieure (compression) et inférieure (traction) de l'éprouvette à l'aide de jauges de déformation. Le comportement du béton selon l'invention est illustré en figure 17. Le résultat mesuré est comparé à celui d'un béton traditionnel dans le tableau suivant :

**TABLEAU VIII**

| | |
|---|---|
| Béton | Déformation ultime en traction |
| Béton traditionnel | 100 à 150 µm/m |
| Béton selon l'invention | 4000 à 9000 µm/m |

L'invention n'est pas limitée aux réalisations qui ont été décrites.

## Revendications

1. Composition de béton de fibres métalliques à mélanger pour obtenir après durcissement un élément en béton, cette composition étant essentiellement constituée d'un mélange de ciment Portland, de grains de sable, de composants ayant une réaction pouzzolanique avec le ciment, de fibres métalliques, d'un agent dispersant, d'adjuvants éventuels, et d'eau, caractérisée en ce qu'au moins 90 % (en poids) des grains de sable ont une grosseur de grain maximale D au plus égale à 800 micromètres, en ce que au moins 90 % (en poids) des fibres métalliques ont une longueur individuelle 1 comprise dans la gamme 4 mm - 20 mm, en ce que le rapport R entre la longueur moyenne L des fibres et ladite grosseur maximale D est au moins égal à 10, en ce que le volume des fibres métalliques ayant une longueur individuelle comprise dans la gamme 4 mm - 20 mm est de 1.0 % à 4.0 % du volume du béton après durcissement et en ce que pour 100 parties (en poids) de ciment, la composition contient au moins 60 parties (en poids) de grains de sable ayant une grosseur de grain maximale au plus égale à 800 micromètres et au moins 10 parties (en poids) de fibres métalliques ayant une longueur individuelle comprise dans la gamme 4 mm - 20 mm.

2. Composition selon la revendication 1, caractérisée en ce que les grains de sable ayant une grosseur de grain maximale au plus égale à 800 micromètres représentent au moins 95 % (en poids) des grains de sable.

3. Composition selon la revendication 1 ou 2, caractérisée en ce qu'elle comprend une poudre de quartz broyé.

4. Composition selon l'une des revendications 1 à 3, caractérisée en ce que le volume des fibres métalliques ayant une longueur individuelle comprise dans la gamme 4 mm - 20 mm est 2 % à 3 % du volume du béton après la prise.

5. Composition selon la revendication 4, caractérisée en ce que le volume des fibres métalliques ayant une longueur individuelle comprise dans la gamme 4 mm - 20 mm est environ 2.5 % du volume du béton après la prise.

6. Composition selon l'une des revendications 1 à 5, caractérisée en ce que ladite grosseur maximale D est au plus égale à 600 micromètres.

7. Composition selon la revendication 6, caractérisée en ce que ladite grosseur maximale D est au plus égale à 400 micromètres.

8. Composition selon l'une des revendications précédentes caractérisée en ce que ladite longueur individuelle est comprise dans la gamme 8 - 16 mm.

9. Composition selon la revendication 8 caractérisée en ce que 1 est compris dans la gamme 10 - 14 mm.

10. Composition selon l'une des revendications précédentes caractérisée en ce que les fibres métalliques ayant une longueur individuelle comprise dans la gamme 4 mm - 20 mm ont un diamètre compris entre 80 et 500 micromètres.

11. Composition selon la revendication 10 caractérisée en ce que les fibres métalliques ont un diamètre moyen compris entre 100 et 200 micromètres.

12. Composition selon l'une des revendications précédentes caractérisé en ce que la grosseur maximale des grains de sable ayant une grosseur de grain maximale au plus égale à 800 micromètres est au plus égale à 500 micromètres et en ce que les fibres métalliques ayant une longueur individuelle comprise dans la gamme 4 mm - 20 mm ont une longueur supérieure à 10 mm.

13. Composition selon l'une des revendications précédentes caractérisée en ce que ledit rapport R est au moins égal à 20

14. Composition selon l'une des revendications précédentes, caractérisée en ce que le pourcentage (en poids) d'agent dispersant (extrait sec) par rapport au poids de ciment est d'au moins 0,5, de préférence d'au moins 1.2.

15. Composition selon la revendication 14, caractérisée en ce que le pourcentage (en poids) d'agent dispersant (extrait sec) par rapport au poids de ciment est d'environ 1,8.

16. Composition selon l'une des revendications 1 à 15, caractérisée en ce que le ciment Portland est un ciment CPA PMES, HP, HPR ou HTS.

17. Composition selon l'une des revendications 1 à 16, caractérisée en ce que les fibres métalliques sont des fibres du groupe constitué par les fibres d'acier, les fibres d'acier inoxydable, et les fibres d'acier ou d'acier inoxydable revêtus d'un métal non ferreux tel que le cuivre, le zinc et autres métaux non ferreux.

18. Composition selon l'une des revendications 1 à 17, caractérisée en ce que les éléments fins ont une grosseur de grain moyenne inférieure à 0,5 micromètre.

19. Composition selon l'une des revendications 1 à 18, caractérisée en ce que les éléments fins comprennent des éléments du groupe constitué par la silice, les cendres volantes et les laitiers de haut fourneaux.

20. Composition selon la revendication 19, caractérisée en ce que les éléments fins comprennent de la fumée de silice.

21. Composition selon l'une des revendications 1 à 20, caractérisée en ce que le pourcentage en poids eau/ciment est de 10 à 30.

22. Composition selon la revendication 21, caractérisée en ce que le pourcentage en poids eau/ciment est de 12 à 20.

23. Composition selon la revendication 1, caractérisée en ce qu'il comprend, pour 100 parties en poids de ciment Portland, 60 à 150, de préférence 80 à 130 parties en poids de sable fin ayant une grosseur de grain moyenne compris entre 150 et 400 micromètres, 10 à 40, de préférence 20 à 30 parties du poids de silice amorphe ayant une grosseur de grain moyenne inférieure à 0,5 micromètre, 10 à 80, de préférence 15 à 40 parties en poids de fibres métalliques ayant une longueur moyenne comprise entre 10 et 14 mm, au moins 0.5 parties en poids (extrait sec) d'un agent dispersant, des adjuvants éventuels, et 10 à 30 parties en poids d'eau.

24. Composition selon la revendication 23, caractérisée en ce qu'il est malaxé avec 13 à 20 parties en poids d'eau.

25. Composition selon la revendication 23 ou 24, caractérisée en ce qu'elle comporte environ au moins 1,2 partie en poids de superplastifiant.

26. Composition selon l'une des revendications 23 à 25, caractérisée en ce que les fibres métalliques sont des fibres du groupe constitué par les fibres d'acier, les fibres d'acier inoxydable, éventuellement revêtues d'un métal non ferreux tel que le cuivre, le zinc et autres métaux non ferreux.

27. Composition selon l'une des revendications 23 à 26, caractérisée en ce qu'elle comprend de la poudre de quartz broyé.

28. Elément en béton obtenu par durcissement d'une composition selon l'une des revendications 1 à 27.

29. Procédé de cure du béton d'un élément selon la revendication 28, dans lequel le béton est étuvé à une température de la gamme 60° - 100 ° C, à partir de la fin de la prise, pendant une période de six heures à quatre jours.

30. Procédé selon la revendication 29, caractérisée en ce que le béton est étuvé pendant une période de douze à vingt quatre heures.

31. Procédé selon la revendication 30, caractérisé en ce que le béton est curé à une température de 70°C à 90°C.

32. Procédé de cure du béton d'un élément en béton selon la revendication 28 dans lequel le béton est curé à une température de la gamme 60° C - 100 ° C pendant une période de six heures à quatre jours, partant d'au moins un jour après le début de la prise.

33. Elément en béton selon la revendication 28 et ayant subi une cure selon l'une des revendications 27 à 30.

34. Element en béton selon la revendication 28 ou 33 précontraint en prétension par fil adhérent.

35. Elément en béton selon la revendication 28 ou 33 précontraint en prétension par toron adhérent.

36. Elément en béton selon la revendication 28 ou 33 précontraint en post-tension par monotorons gainés graissés.

37. Elément en béton selon la revendication 28 ou 33 précontraint en post-tension par câble ou barre sous gaine, le câble étant constitué d'un assemblage de fils.

38. Elément en béton selon la revendication 28 ou 33, précontraint en post-tension par câble sous gaine, le câble étant constitué de torons.

## Claims

1. A metal fiber concrete composition that is mixed in order to obtain, after setting, a concrete element, said composition essentially consisting of a mixture of Portland cement, granular elements, compounds having a pozzolan reaction with the cement, metal fibers, a dispersing agent, optional admixtures, and water, and being characterized in that not less than 90% (by weight) of the granular elements have a maximum particle size D not greater than 800 micrometers, in that not less than 90% (by weight) of the metal fibers have an individual length *l* lying in the 4 mm - 20 mm range, in that the ratio R of the average length L of the fibers to the said maximum size D is not less than 10, in that the amount of metal fibers having an individual length lying in the 4 mm - 20 mm range, lies in the range 1.0% to 4.0% of the volume of the concrete after setting, and in that per 100 parts (by weight) of cement, the composition contains not less than 60 parts (by weight) of grain elements having a maximum particle size not greater than 800 micrometers, and not less than 10 parts (by weight) of metal fibers having an individual length lying in the 4 mm - 20 mm range.

2. A composition according to claim 1, characterized in that the granular elements having a maximum particle size not greater than 800 micrometers represent at least 95% (by weight) of the grain elements.

3. A composition according to claim 1 or 2, characterized in that it includes a crushed quartz powder.

4. A composition according to any one of claims 1 to 3, characterized in that the volume of the metal fibers having an individual length lying in the 4 mm - 20 mm range, lies in the range 2% to 3% of the volume of the concrete after setting.

5. A composition according to claim 4, characterized in that the volume of the metal fibers having an individual length lying in the 4 mm - 20 mm range is approximately 2.5% of the volume of the concrete after setting.

6. A composition according to any one of claims 1 to 5, characterized in that the said maximum size D is not greater than 600 micrometers.

7. A composition according to claim 6, characterized in that the said maximum size D is not greater than 400 micrometers.

8. A composition according to any preceding claim, characterized in that the said individual length lies in the 8 mm- 16 mm range.

9. A composition according to claim 8, characterized in that *l* lies in the 10 mm- 14 mm range.

10. A composition according to any preceding claim, characterized in that the metal fibers having an individual length lying in the 4 mm - 20 mm range have a diameter lying in the range 80 micrometers to 500 micrometers.

11. A composition according to claim 10, characterized in that the metal fibers have an average diameter lying in the range 100 micrometers to 200 micrometers.

12. A composition according to any preceding claim, characterized in that the maximum size of: the granular elements having a maximum particle size not greater than 800 micrometers is not greater than 500 micrometers and in that the metal fibers having an individual length lying in the 4 mm - 20 mm range have a length greater than 10 mm.

13. A composition according to any preceding claim, characterized in that the said ratio R is not less than 20.

14. A composition according to any preceding claim, characterized in that the percentage (by weight) of dispersing agent (dry extract) relative to the weight of cement is at least 0.5, and preferably at least 1.2.

15. A composition according to claim 14, characterized in that the percentage (by weight) of dispersing agent (dry extract) relative to the weight of cement is approximately 1.8.

16. A composition according to any one of claims 1 to 15, characterized in that the Portland cement is a CPA PMES, HP, HPR, or HTS cement.

17. A composition according to any one of claims 1 to 16, characterized in that the metal fibers are fibers of the group consisting of steel fibers, stainless steel fibers, and steel or stainless steel fibers coated with a nonferrous metal such as copper, zinc, and other nonferrous metals.

18. A composition according to any one of claims 1 to 17, characterized in that the fine elements have an average particle size of less than 0.5 micrometers.

19. A composition according to any one of claims 1 to 18, characterized in that the fine elements comprise elements of the group consisting of silica, fly ash, and blast-furnace slag.

20. A composition according to claim 19, characterized in that the fine elements comprise fumed silica.

21. A composition according to any one of claims 1 to 20, characterized in that the water/cement percentage by weight lies in the range 10 to 30.

22. A composition according to claim 21, characterized in that the water/cement percentage by weight lies in the range 12 to 20.

23. A composition according to claim 1, characterized in that it comprises, per 100 parts by weight of Portland cement, from 60 to 150, preferably 80 to 130, parts by weight of fine sand having an average particle size lying in the range 150 micrometers to 400 micrometers, from 10 to 40, preferably 20 to 30, parts by weight of amorphous silica having an average particle size less than 0.5 micrometers, from 10 to 80, preferably 15 to 40, parts by weight of metal fibers having an average length lying in range 10 mm to 14 mm, at least 0.5 parts by weight (dry extract) of a dispersing agent, optional admixtures, and from 10 to 30 parts by weight of water.

24. A composition according to claim 23, characterized in that it is mixed with from 13 to 20 parts by weight of water.

25. A composition according to claim 23 or 24, characterized in that it includes at least 1.2 parts approximately by weight of superplasticizer.

26. A composition according to any one of claims 23 to 25, characterized in that the metal fibers are fibers of the group consisting of steel fibers, and stainless steel fibers, optionally coated with a nonferrous metal such as copper, zinc, and other nonferrous metals.

27. A composition according to any one of claims 23 to 26, characterized in that it includes crushed quartz powder.

28. Concrete element obtained by hardening a composition according to any one of claims 1 to 27.

29. Process for curing the concrete of an element according to claim 28, in which the concrete is oven cured at a temperature lying in the range 60° to 100°C for a period of six hours to four days, starting from the end of setting.

30. Process according to claim 29, characterized in that the concrete is oven cured for a period of twelve hours to twenty-four hours.

31. Process according to claim 30, characterized in that the concrete is cured at a temperature of 70°C to 90°C.

32. Process for curing the concrete of a concrete element according to claim 28, in which the concrete is cured at a temperature in the range 60°C - 100°C for a period of six hours to four days, starting at least one day after the start of setting.

33. Concrete element according to claim 28 and having been subjected to curing according to any one of claims 27 to 30.

34. Concrete element according to claim 28 or 33, prestressed by pre-tensioning using bonding wire.

35. Concrete element according to claim 28 or 33, prestressed by pre-tensioning using bonding twisted strand.

36. Concrete element according to claim 28 or 33, prestressed by post-tensioning using greased sheathed monostrands.

37. Concrete element according to claim 28 or 33, prestressed by post-tensioning using ducted cable or bar, the cable consisting of an assembly of wires.

38. Concrete element according to claim 28 or 33, prestressed by post-tensioning using ducted cable, the cable consisting of twisted strands.

## Patentansprüche

1. Zusammensetzung für Beton mit metallischen Fasern, welche zu mischen ist, um nach Aushärtung ein Element aus Beton zu erhalten, wobei diese Zusammensetzung im wesentlichen aus einem Portland-Zementgemisch, Sandkörnern, Komponenten, welche eine Puzzolanreaktion mit dem Zement aufweisen, metallischen Fasern, einem Dispersionsmittel, eventuellen Zusatzstoffen und aus Wasser besteht, dadurch gekennzeichnet, daß wenigstens 90% (Gew.-%) der Sandkörner eine maximale Korngröße D von höchstens gleich 800 Mikrometern aufweisen, daß wenigstens 90% (Gew.-%) der metallischen Fasern eine Einzellänge 1 in dem Bereich von 4 mm - 20 mm aufweisen, daß das Verhältnis R zwischen der mittleren Länge L der Fasern und der maximalen Größe D wenigstens gleich 10 ist, daß das Volumen der metallischen Fasern, welche eine Einzellänge in dem Bereich von 4 mm - 20 mm aufweisen, von 1,0% bis 4,0% des Volumens des Betons nach Aushärtung beträgt, und daß die Zusammensetzung für 100 Anteile (Gew.-Anteile) Zement wenigstens 60 Anteile (Gew.-Anteile) Sandkörner, welche eine maximale Korngröße von höchstens gleich 800 Mikrometern aufweisen, und wenigstens 10 Anteile (Gew.-Anteile) metallische Fasern, welche eine Einzellänge in dem Bereich von 4 mm - 20 mm aufweisen, enthält.

2. Zusammensetzung gemäß Anspruch 1, dadurch gekennzeichnet, daß die Sandkörner, welche eine maximale Korngröße von höchstens gleich 800 Mikrometern aufweisen, wenigstens 95% (Gew.-%) der Sandkörner darstellen.

3. Zusammensetzung gemäß Anspruch 1 oder 2, dadurch gekennzeichnet, daß sie ein fein gemahlenes Quartzpulver aufweist.

4. Zusammensetzung gemäß einem der Ansprüche 1 bis 3, dadurch gekennzeichnet, daß das Volumen der metallischen Fasern, welche eine Einzellänge in dem Bereich von 4 mm - 20 mm aufweisen, 2% bis 3% des Volumens des Betons nach der Verfestigung beträgt.

5. Zusammensetzung gemäß Anspruch 4, dadurch gekennzeichnet, daß das Volumen der metallischen Fasern welche eine Einzellänge in dem Bereich von 4 mm - 20 mm aufweisen, ungefähr 2,5% des Volumens des Betons nach der Verfestigung beträgt.

6. Zusammensetzung gemäß einem der Ansprüche 1 bis 5, dadurch gekennzeichnet, daß die maximale Größe D höchstens gleich 600 Mikrometer ist.

7. Zusammensetzung gemäß Anspruch 6, dadurch gekennzeichnet, daß die maximale Größe D höchstens gleich 400 Mikrometer ist.

8. Zusammensetzung gemäß einem der vorherigen Ansprüche, dadurch gekennzeichnet, daß die Einzellänge in dem Bereich von 8 - 16 mm liegt.

9. Zusammensetzung gemäß Anspruch 8, dadurch gekennzeichnet, daß 1 in dem Bereich von 10 - 14 mm liegt.

10. Zusammensetzung gemäß einem der vorherigen Ansprüche, dadurch gekennzeichnet, daß die metallischen Fasern, welche eine Einzellänge in dem Bereich von 4 mm - 20 mm aufweisen, einen Durchmesser zwischen 80 und 500 Mikrometern aufweisen.

11. Zusammensetzung gemäß Anspruch 10, dadurch gekennzeichnet, daß die metallischen Fasern einen mittleren Durchmesser zwischen 100 und 200 Mikrometern aufweisen.

12. Zusammensetzung gemäß einem der vorherigen Ansprüche, dadurch gekennzeichnet, daß die maximale Größe der Sandkörner, welche eine maximale Korngröße von höchstens gleich 800 Mikrometern aufweisen, höchstens gleich 500 Mikrometer ist, und daß die metallischen Fasern, welche eine Einzellänge in dem Bereich von 4 mm - 20 mm aufweisen, eine größere Länge als 10 mm aufweisen.

13. Zusammensetzung gemäß einem der vorherigen Ansprüche, dadurch gekennzeichnet, daß das Verhältnis R wenigstens gleich 20 ist.

14. Zusammensetzung gemäß einem der vorherigen Ansprüche, dadurch gekennzeichnet, daß der Prozentsatz (in Gewicht) an Dispersionsmittel (Trockenextrakt) bezüglich des Zementgewichtes bei wenigstens 0,5, vorzugsweise bei wenigstens 1,2 liegt.

15. Zusammensetzung gemäß Anspruch 14, dadurch gekennzeichnet, daß der Prozentsatz (in Gewicht) an Dispersionsmittel (Trockenextrakt) bezüglich des Zementgewichtes bei ungefähr 1,8 liegt.

16. Zusammensetzung gemäß einem der Ansprüche 1 bis 15, dadurch gekennzeichnet, daß der Portlandzement ein CPA PMES-, HP-, HPR- oder HTS-Zement ist.

17. Zusammensetzung gemäß einem der Ansprüche 1 bis 16, dadurch gekennzeichnet, daß die metallischen Fasern Fasern aus der Gruppe sind, welche von Stahlfasern, rostfreien Stahlfasern und Stahlfasern oder rostfreien Stahlfasern, welche mit einem Nichteisen-Metall wie Kupfer, Zink oder anderen Nichteisen-Metallen beschichtet sind, gebildet ist.

18. Zusammensetzung gemäß einem der Ansprüche 1 bis 17, dadurch gekennzeichnet, daß die feinen Elemente eine mittlere Korngröße von unterhalb 0,5 Mikrometern aufweisen.

19. Zusammensetzung gemäß einem der Ansprüche 1 bis 18, dadurch gekennzeichnet, daß die feinen Elemente Elemente aus der Gruppe aufweisen, welche aus Kieselerde, Flugstaub und Hochofenschlacken besteht.

20. Zusammensetzung gemäß Anspruch 19, dadurch gekennzeichnet, daß die feinen Elemente Quarzstaub aufweisen.

21. Zusammensetzung gemäß einem der Ansprüche 1 bis 20, dadurch gekennzeichnet, daß der Prozentsatz in Gewicht an Wasser/Zement von 10 bis 30 beträgt.

22. Zusammensetzung gemäß Anspruch 21, dadurch gekennzeichnet, daß der Prozentsatz in Gewicht an Wasser/Zement von 12 bis 20 beträgt.

23. Zusammensetzung gemäß Anspruch 1, dadurch gekennzeichnet, daß sie für 100 Gewichtsanteile Portlandzement 60 bis 150, vorzugsweise 80 bis 130 Gewichtsanteile feinen Sand mit einer mittleren Korngröße zwischen 150 und 400 Mikrometern, 10, bis 40, vorzugsweise 20 bis 30 Gewichtsanteile amorphe Kieselerde mit einer mittleren Korngröße von unterhalb 0,5 Mikrometern, 10 bis 80, vorzugsweise 15 bis 40 Gewichtsanteile metallische Fasern mit einer mittleren Länge zwischen 10 und 14 mm, wenigstens 0,5 Gewichtsanteile (Trockenextrakt) eines Dispersionsmittels, eventuelle Zusatzstoffe und 10 bis 30 Gewichtsanteile Wasser aufweist.

24. Zusammensetzung gemäß Anspruch 23, dadurch gekennzeichnet, daß sie mit 13 bis 20 Gewichtsanteilen Wasser gemischt wird.

25. Zusammensetzung gemäß einem der Ansprüche 23 bis 25, dadurch gekennzeichnet, daß sie ungefähr wenigstens 1,2 Gewichtsanteile Superplastizitätsmittel aufweist.

26. Zusammensetzung gemäß einem der Ansprüche 23 bis 25, dadurch gekennzeichnet, daß die metallischen Fasern Fasern sind aus der Gruppe, welche von Stahlfasern und rostfreien Stahlfasern gebildet ist, welche eventuell mit einem Nichteisen-Metall wie Kupfer, Zink oder anderen Nichteisen-Metallen beschichtet sind.

27. Zusammensetzung gemäß einem der Ansprüche 23 bis 26, dadurch gekennzeichnet, daß sie fein gemahlenes Quartzpulver aufweist.

28. Betonelement, welches durch Aushärten einer Zusammensetzung gemäß einem der Ansprüche 1 bis 27 erhalten wird.

29. Verfahren zum Härten des Betons eines Elementes gemäß Anspruch 28, bei welchem der Beton bei einer Temperatur in dem Bereich von 60° bis 100°C ausgehend von dem Ende der Verfestigung über einen Zeitraum von sechs Stunden bis vier Tage ofengetrocknet wird.

30. Verfahren gemäß Anspruch 29, dadurch gekennzeichnet, daß der Beton über einen Zeitraum von zwölf bis vierundzwanzig Stunden ofengetrocknet wird.

31. Verfahren gemäß Anspruch 30, dadurch gekennzeichnet, daß der Beton bei einer Temperatur von 70° bis 90°C gehärtet wird.

32. Verfahren zum Härten des Betons eines Betonelementes gemäß Anspruch 28, bei welchem der Beton bei einer Temperatur in dem Bereich von 60°C bis 100°C über einen Zeitraum von sechs Stunden bis vier Tagen ausgehend von wenigstens einem Tag nach dem Beginn der Verfestigung gehärtet wird.

33. Betonelement gemäß Anspruch 28, welches einer Härtung gemäß einem der Ansprüche 27 bis 30 unterzogen wurde.

34. Betonelement gemäß Anspruch 28 oder 33, welches mit Vorspannung durch festhaftenden Draht vorgespannt wird.

35. Betonelement gemäß Anspruch 28 oder 33, welches mit Vorspannung durch festhaftende Litze vorgespannt wird.

36. Betonelement gemäß Anspruch 28 oder 33, welches mit Nachspannung durch gefettete, gekörnte Einlitzen vorgespannt wird.

37. Betonelement gemäß Anspruch 28 oder 33, welches mit Nachspannung durch ein Seil oder eine Stange mit Ummantelung vorgespannt wird, wobei das Seil von einer Drahtansammlung gebildet ist.

38. Betonelement gemäß Anspruch 28 oder 33, welches mit Nachspannung durch ein Seil mit Ummantelung vorgespannt wird, wobei das Seil von Litzen gebildet ist.
